Europäisches Patentamt

(19) European Patent Office

Office européen des brevets

(11) Numéro de publication : **0 114 010**
**B1**

(12) **FASCICULE DE BREVET EUROPÉEN**

(45) Date de publication du fascicule du brevet :
04.03.87

(21) Numéro de dépôt : **83402386.3**

(22) Date de dépôt : **09.12.83**

(51) Int. Cl.⁴ : **B 60 K 15/08**, B 60 K 15/04,
F 17 C 1/00

(54) Réservoir pour stocker les carburants d'alimentation d'un moteur à combustion interne utilisant du carburant liquide et du carburant gazeux, notamment liquéfié.

(30) Priorité : **18.01.83 FR 8300714**

(43) Date de publication de la demande :
**25.07.84 Bulletin 84/30**

(45) Mention de la délivrance du brevet :
**04.03.87 Bulletin 87/10**

(84) Etats contractants désignés :
**BE DE FR GB IT LU NL**

(56) Documents cités :
**DE-A- 3 147 792**
**FR-A- 1 121 643**
**FR-A- 2 350 544**
**FR-A- 2 462 295**
**FR-A- 2 507 955**
**US-A- 4 370 998**

(73) Titulaire : **UNION DES GAZ MODERNES**
**152, avenue des Champs Elysées**
**F-75008 Paris (FR)**

(72) Inventeur : **Goubert, Michel**
**16, Bld. Voltaire**
**F-92130 Issy Les Moulineaux (FR)**

(74) Mandataire : **Gorree, Jean-Michel et al**
**Cabinet Plasseraud 84, rue d'Amsterdam**
**F-75009 Paris (FR)**

Jouve, 18, rue St-Denis, 75001 Paris, France

## Description

La présente invention concerne un réservoir agencé pour stocker les carburants d'alimentation d'un moteur à combustion interne apte à utiliser aussi bien du carburant liquide, tel que de l'essence, que du carburant gazeux, notamment liquéfié, tel que du GPL.

Pour les moteurs ainsi agencés, il est prévu jusqu'à présent deux circuits indépendants d'alimentation en carburants, l'un étant affecté à l'alimentation en carburant liquide et l'autre à l'alimentation en carburant gazeux liquéfié. C'est le cas entre autres pour les véhicules automobiles dits « à bicarburation » qui conservent le circuit d'alimentation en essence monté d'origine par le constructeur et qui reçoivent en supplément un équipement d'alimentation en carburant gazeux. En particulier, ces véhicules reçoivent un second réservoir pour le carburant gazeux liquéfié qui, faute de place, est installé, pour les automobiles particulières, dans le coffre à bagage.

Un tel agencement est certes encombrant et très contraignant puisque le volume libre du coffre est considérablement réduit.

En outre, cet agencement confère au véhicule une autonomie de fonctionnement avec le carburant liquide qui est sensiblement égale à l'autonomie qu'il possède en fonctionnant avec le carburant gazeux, alors que, dans les conditions économiques actuelles qui justifient la mise en place de l'installation supplémentaire d'alimentation en carburant gazeux, c'est ce carburant gazeux qui constitue le carburant principal, le carburant liquide n'étant utilisé qu'à titre auxiliaire, par exemple en cas de panne de carburant gazeux pour rallier un point d'alimentation en carburant gazeux. Il existe donc une disproportion entre l'équipement du véhicule et les conditions économiques d'emploi des deux types de carburant.

L'invention a donc essentiellement pour but de remédier à ces inconvénients en proposant un nouveau réservoir agencé pour stocker les deux types de carburant en un emplacement unique et tenant compte des critères économiques d'utilisation de ces carburants, tout en étant d'une réalisation simple et en respectant les normes de sécurité.

A ces fins, le réservoir conforme à l'invention comprend :

au moins une première enceinte fermée ou enceinte intérieure constituant un réservoir intérieur agencé pour contenir le carburant gazeux liquéfié,

une seconde enceinte fermée ou enceinte extérieure entourant ladite première enceinte et définissant avec celle-ci un réservoir périphérique ou réservoir extérieur agencé pour contenir le carburant liquide,

un conduit de remplissage du réservoir intérieur et un conduit de remplissage du réservoir extérieur,

et un unique embout de remplissage raccordé aux extrémités libres des deux conduits de remplissage et agencé pour autoriser le remplissage sélectif de l'un ou l'autre réservoir.

De préférence, l'embout de remplissage comprend une zone centrale raccordée à l'extrémité libre du conduit de remplissage intérieur et munie d'un organe d'obturation étanche pour le carburant gazeux et comprend une zone périphérique, entourant ladite zone centrale, raccordée à l'extrémité libre du conduit de remplissage extérieur et munie d'orifices pour le passage du carburant liquide.

Dans un mode de réalisation possible, les enceintes sont cylindriques de révolution et coaxiales avec des extrémités arrondies sensiblement en forme de calotte sphérique.

Dans un mode de réalisation qui peut s'avérer plus avantageux dans la pratique courante, le réservoir comprend plusieurs enceintes intérieures, de forme cylindrique de révolution, disposées côte à côte au sein de l'enceinte extérieure. Ces enceintes peuvent alors être disposées horizontalement et/ou verticalement selon leur configuration.

Un tel agencement se révèle avantageux dans la mesure où il autorise la réutilisation du réservoir pour carburant liquide monté d'origine sur le véhicule à équiper. Ce réservoir d'origine est, à l'heure actuelle, habituellement constitué d'une partie de dessus et d'une partie de fond solidarisées, périphériquement l'une à l'autre ; pour constituer une enceinte extérieure possédant une hauteur suffisante pour recevoir la ou les enceintes intérieures précitées, il suffit, après les avoir séparées, de réunir les deux susdites parties, éventuellement à l'aide d'au moins un bandeau intermédiaire de hauteur adéquate. Le réservoir finalement obtenu possède donc toujours la même forme, à la hauteur près, que le réservoir d'origine et il peut ainsi être monté sans problème sous le châssis du véhicule en lieu et place du réservoir d'origine.

Avantageusement, des cerclages d'entretoisement peuvent être disposés entre la ou les enceintes intérieures et l'enceinte extérieure du réservoir, ces cerclages possédant au moins un passage transversal traversant pour la libre circulation du carburant liquide.

D'une façon classique, chaque enceinte intérieure est munie d'un bossage support de polyvanne qui, d'une façon souhaitable, s'étend jusqu'à l'extérieur de l'enceinte extérieure.

De préférence, pour les raisons indiquées précédemment, la capacité du réservoir extérieur est inférieure à la capacité du réservoir intérieur.

Grâce aux dispositions qui viennent d'être évoquées, le réservoir conforme à l'invention permet de regrouper les deux types de carburant, liquide et gazeux, dans un même emplacement ; cela est particulièrement bénéfique dans le cas d'un véhicule automobile puisque le nouveau réservoir peut être installé, en totalité ou partiellement, sous le véhicule, sensiblement dans la zone occupée par le réservoir à carburant liquide normalement monté par le constructeur, en libérant d'autant le coffre à bagage.

En outre, les volumes respectifs des deux réservoirs sont établis en fonction des taux d'utilisation respectifs des deux carburants ; le volume de carburant liquide est ramené à une valeur suffisante pour l'emploi envisagé en tant que carburant auxiliaire, ce qui, d'une part, contribue à libérer de la place disponible et, d'autre part, contribue à accroître la sécurité en minimisant les quantités de matières inflammables embarquées dans le véhicule.

Le réservoir intérieur destiné au carburant gazeux liquéfié doit être construit conformément aux normes de sécurité en vigueur pour ce type de matériel, et il peut même, si besoin en est, être d'un type déjà existant, comme cela a été exposé.

De plus, la présence de l'enceinte extérieure, convenablement entretoisée et maintenue par rapport à l'enceinte intérieure, contribue à accroître la sécurité en cas de choc puisque le carburant gazeux est protégé par une double paroi.

Par ailleurs, les dispositions adoptées pour l'embout de remplissage évitent de multiplier les points de remplissage tout en écartant les risques d'interversion des produits de remplissage.

On pourra également noter que l'agencement particulier de l'embout de remplissage ne permet pas de soutirer facilement du carburant liquide puisque le siphonage du réservoir extérieur est rendu très difficile, voire impossible.

On remarquera également que cet agencement contribue à une protection isotherme du carburant gazeux liquéfié ; on obtient donc une température du gaz liquéfié relativement stabilisée qui supprime les problèmes posés par les démarrages à froid. De plus, les gains de poids enregistrés avec un réservoir conforme à l'invention permettent une diminution significative de la consommation unitaire du véhicule ainsi équipé.

Enfin, les coûts de fabrication, d'installation et d'entretien d'un tel réservoir sont bien moindres que ceux entraînés par l'utilisation de deux réservoirs distincts.

L'invention sera mieux comprise à la lecture de la description qui suit de certains modes de réalisation donnés uniquement à titre d'exemples illustratifs, sans aucun caractère limitatif ; dans cette description, on se réfère aux dessins annexés sur lesquels :

La figure 1 est une vue de côté, avec coupe axiale partielle, d'un premier mode de réalisation d'un réservoir agencé conformément à l'invention ;

La figure 2 est une vue en coupe transversale selon la ligne II-II de la figure 1 ;

La figure 3 est une vue de côté, en coupe partielle, d'un embout de remplissage pour un réservoir agencé conformément à l'invention ;

Les figures 4 et 5, 6 et 7, et 8 et 9 sont des vues schématiques en coupe latérale et de dessus avec partie supérieure du réservoir enlevée, de respectivement trois modes de réalisation d'un réservoir agencé conformément à l'invention.

La figure 10 est une vue de derrière d'une variante de réalisation d'un embout de remplissage pour un réservoir agencé conformément à l'invention, et

Les figures 11 et 12 sont deux vues en coupes axiales, respectivement dans des plans différents, de l'embout de la figure 10.

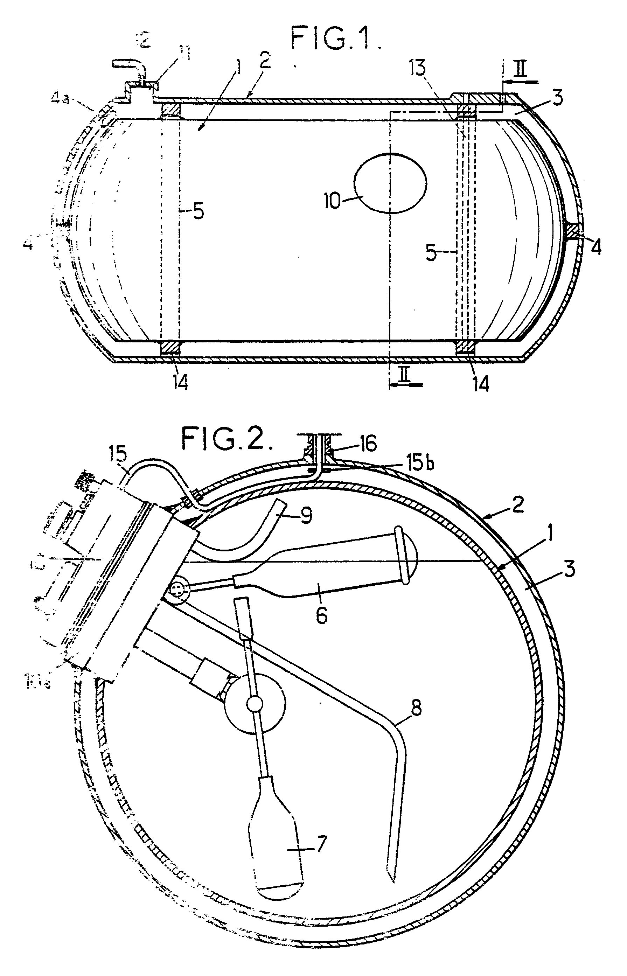

En se référant tout d'abord aux figures 1 et 2, selon un premier mode de réalisation, un réservoir conforme à l'invention comprend une première enceinte fermée 1 ou enceinte intérieure (représentée en vue extérieure sur la figure 1), constituant un premier réservoir destiné à du carburant gazeux liquéfié tel que par exemple du GPL, et une seconde enceinte fermée 2 ou enceinte extérieure (représentée en coupe axiale sur la figure 1) entourant complètement l'enceinte intérieure 1, avec un intervalle entre ces deux enceintes de manière à constituer un second réservoir 3, périphérique, destiné à du carburant liquide tel que par exemple de l'essence.

Compte tenu de la pression exercée par le carburant gazeux liquéfié, l'enceinte intérieure 1 doit être constituée conformément aux normes de sécurité relatives aux réservoirs de gaz, avec une épaisseur de 3 à 5 mm selon sa capacité, et elle peut du reste être d'un type connu, disponible dans le commerce.

Par contre, du fait que le carburant liquide destiné à remplir le réservoir 3 est à la pression atmosphérique, l'enceinte 2 peut être constituée de façon plus simple et plus classique, en tôle de moindre épaisseur. Elle peut par exemple être réalisée par soudure de deux demi-coquilles en tôle emboutie.

L'enceinte extérieure 2 possède des parois sensiblement homothétiques parallèles à celles de l'enceinte intérieure 1. Des cales d'extrémité 4 et des cerclages 5 assurent un entretoisement convenable des deux enceintes et constituent des barrières antiflot minimisant les mouvements inertiels du carburant liquide.

Avantageusement, les enceintes 1 et 2 sont sensiblement cylindriques de révolution avec des parois d'extrémité en forme de calotte sphérique.

L'enceinte intérieure 1 est équipée de tous les dispositifs requis pour les réservoirs de gaz sous pression dispositifs (commande de remplissage avec son flotteur 6, détection de niveau avec son flotteur 7, tube 8 de reprise liquide, tube 9 de reprise gazeuse, etc.) qui sont regroupés dans un bloc polyvanne unique 10. Comme représenté à la figure 2, le bloc polyvanne 10 est accessible de l'extérieur. Son bossage support 10a traverse donc les enceintes 1 et 2 sur lesquelles il est soudé.

L'enceinte extérieure 2, quant à elle, est équipée de tous les auxiliaires nécessaires pour un réservoir de carburant liquide : cloche 11 de concentration des dégagements gazeux, tube d'expansion 12, tube plongeur 13 de reprise liquide, flotteur de limitation de remplissage, éventuellement jauge de niveau (non représentée). Avantageusement, le tube plongeur 13 est logé au sein d'un des cerclages d'entretoisement antiflot 5. Bien entendu, les cerclages 5 sont agencés pour laisser circuler le liquide (orifices 14). Les cales d'extrémité 4 peuvent recevoir l'articulation de pivotement d'une jauge de niveau rotative 4a.

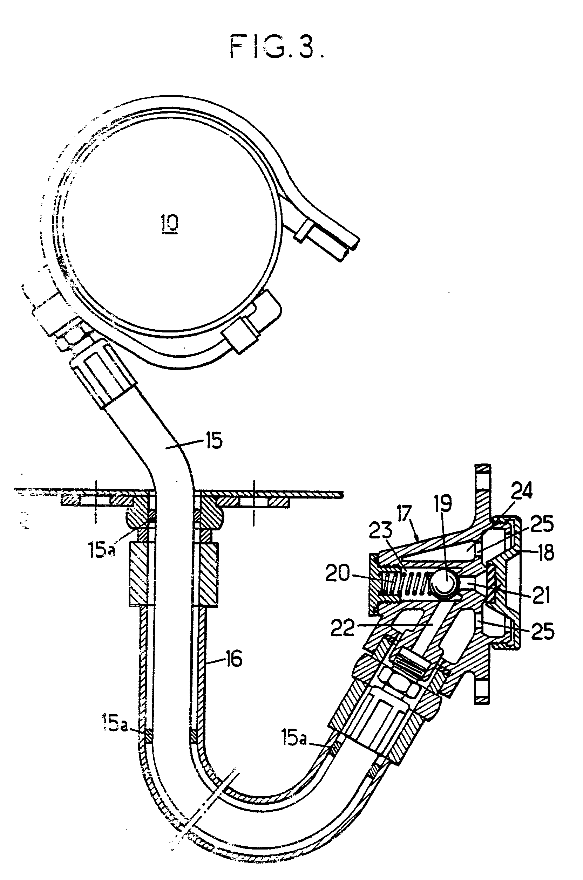

Pour le remplissage des deux réservoirs 1 et 3, deux conduits sont prévus : un conduit 15 pour le carburant gazeux liquéfié est raccordé à la polyvanne 10 et un conduit 16 pour le carburant liquide est raccordé à l'enceinte extérieure 2. Dans un premier exemple d'agencement représenté aux figures 2 et 3 (agencement qui est indépendant de la structure qui vient d'être décrite pour les réservoirs 1 et 3), le conduit 15 est logé coaxialement à l'intérieur du conduit 16, de sorte qu'au-delà du raccordement du conduit 16 avec l'enceinte extérieure 2, le conduit 15 s'étend dans le réservoir 3 jusqu'à la polyvanne 10. Des anneaux de centrage ajourés 15a assurent la parfaite concentricité des conduits 15 et 16.

A l'autre extrémité des conduits 15, 16 il est prévu un embout de remplissage 17 muni de son bouchon 18. L'embout de remplissage comprend un organe central constitué sous forme d'une valve obturatrice 19 maintenue en appui élastique (ressort 20) contre un siège interposé entre un orifice central de remplissage 21 et un orifice arrière 22 communiquant avec la chambre 23 de la valve 19 et raccordé avec le conduit intérieur 15.

Le conduit 15 supporte un flotteur annulaire 15b, reposant sur une bague fixe solidaire du conduit, assurant l'arrêt de remplissage du réservoir 3 au niveau optimum choisi.

L'organe central de l'embout de remplissage est entouré par une chambre annulaire 24 raccordée vers l'arrière avec le conduit extérieur 16 et débouchant vers l'extérieur, à l'avant, par des orifices 25.

Le remplissage en carburant gazeux, notamment liquéfié, s'effectue en mettant en place sur l'embout 17, après retrait du bouchon 18, un pistolet de remplissage (non représenté) coopérant de façon étanche avec l'orifice 21 et muni d'un doigt axial mobile repoussant la valve 19.

Le remplissage en carburant liquide s'effectue en mettant en place sur l'embout 17, après retrait du bouchon 18, un adaptateur tubulaire (non représenté) apte à recevoir un pistolet de remplissage de type habituel (non représenté), le carburant liquide s'écoulant dans le conduit 16 par l'intermédiaire des orifices 25 et de la chambre annulaire 24. On peut également avoir recours à un pistolet de remplissage spécialement agencé pour coopérer avec l'embout, par exemple par vissage à la place de l'embout 18.

Un tel agencement permet donc le remplissage de l'un ou l'autre des réservoirs 1 ou 3 en un emplacement unique, et sans risque d'interversion des carburants.

Un réservoir tel que celui qui vient d'être décrit se présente donc sous une forme suffisamment compacte pour pouvoir équiper un véhicule automobile, et notamment une voiture particulière, en lieu et place de l'installation pour le seul carburant liquide normalement montée d'origine par le constructeur. Le réservoir peut donc être monté, en totalité ou partiellement, sous le véhicule comme un réservoir ordinaire et libérer le coffre à bagage de tout élément encombrant. L'embout de remplissage mixte 17 peut être installé à la place de l'embout habituel pour carburant liquide seul.

On notera également que, pour éviter une déformation du réservoir, les sangles extérieures réglementaires de fixation du réservoir (non représentées) sont disposées au droit des cerclages d'entretoisement antiflot 5.

Bien entendu, différentes variantes peuvent être envisagées aussi bien pour le réservoir mixte que pour l'embout de remplissage afin de simplifier la fabrication et/ou la mise en place de ces éléments en lieu et place des éléments correspondants prévus d'origine sur le véhicule.

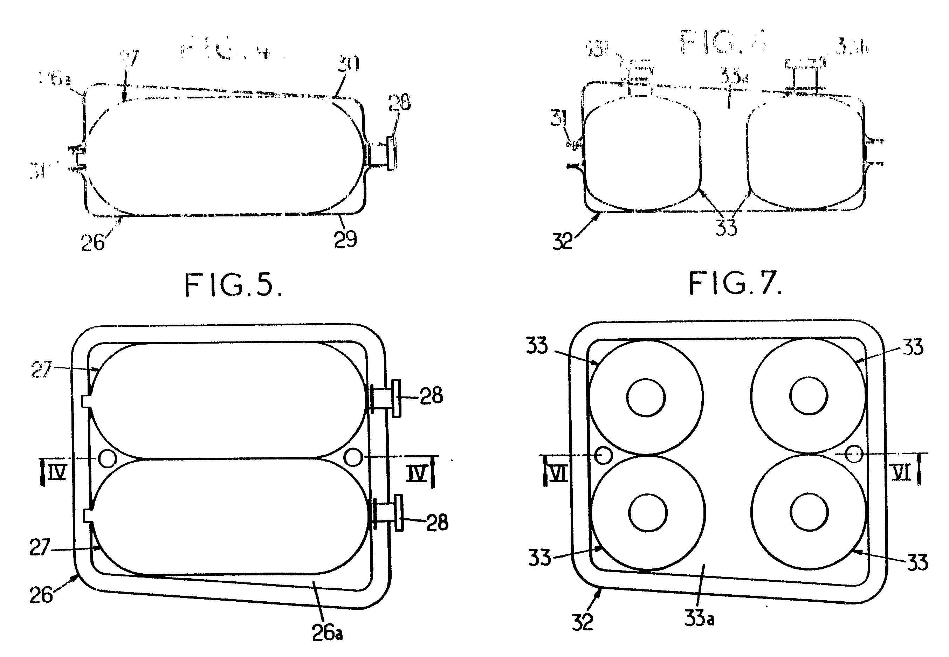

Par exemple, les figures 4 et 5 représentent un autre mode de réalisation d'un réservoir mixte comportant une enceinte extérieure 26 et plusieurs enceintes intérieures 27 disposées côte à côte à l'intérieur de l'enceinte 26.

Les enceintes 27 sont des bonbonnes à gaz liquéfié cylindriques de révolution de forme allongée, disposées parallèlement les unes aux autres en position couchée (c'est-à-dire avec leur axe approximativement horizontal). Chaque enceinte 27 est équipée d'une polyvanne 28 disposée en bout et faisant suffisamment saillie pour traverser la paroi latérale de l'enceinte extérieure 26 et être accessible depuis l'extérieur du réservoir. De façon avantageuse, les enceintes intérieures 27 peuvent être des bonbonnes disponibles dans le commerce et satisfaisant aux réglementations en vigueur concernant le stockage des gaz liquéfiés.

Pour ce qui est maintenant de l'enceinte extérieure 26, il est intéressant qu'elle soit constituée par assemblage de trois éléments comme représenté sur les fig. 4 et 5, savoir : une partie de fond 29, une partie de dessus 30 et un bandeau intermédiaire périphérique 31 interposé entre le fond 29 et le dessus 30.

A l'heure actuelle, les réservoirs à essence des véhicules automobiles, et en particulier des voitures, sont constitués par la solidarisation étanche de deux coques en tôle emboutie dont les formes sont étudiées pour épouser au plus, vers le haut, le contour du châssis et pour libérer, vers le bas, une garde au sol suffisante.

En principe, la hauteur libre interne d'un réservoir à essence classique n'est pas suffisante pour loger des bonbonnes à gaz liquéfié standardisées.

Pour constituer l'enceinte extérieure 26 conforme à l'invention, on part d'un réservoir existant dont on sépare les deux coques ou bien on se procure les deux coques en question non encore assemblées, et on les réunit l'une à l'autre de façon étanche avec interposition d'un bandeau intermédiaire 31 jouant le double rôle d'augmenter la hauteur libre interne de l'enceinte 26, de manière qu'elle puisse recevoir les bonbonnes 27, et de servir de support pour ces bonbonnes.

On obtient finalement un réservoir mixte de mêmes dimensions transversales que le réservoir d'origine, mais de hauteur accrue, et qui, de ce fait, peut être disposé exactement à la place du réservoir à essence d'origine. La hauteur ajoutée, c'est-à-dire la hauteur du bandeau 31, reste suffisamment faible pour ne pas affecter défavorablement la garde au sol du véhicule.

Les figures 6 et 7 montrent encore un autre mode de réalisation dérivant de celui des figures 4 et 5. Dans ce réservoir, l'enceinte extérieure 32 est constituée exactement semblable à l'enceinte 26 des figures 4 et 5 ; par contre, les enceintes intérieures 33 sont ici constituées par des bonbonnes à gaz liquéfié disposées côte à côte approximativement verticalement, avec les polyvannes 33b situées par exemple sur le dessus. Là encore, les bonbonnes 33 peuvent être choisies dans la gamme disponible sur le marché.

Bien entendu, il est possible d'envisager, si cela pouvait présenter un intérêt pour certaines applications, une combinaison des bonbonnes horizontales 27 et de bonbonnes verticales 33.

D'une façon générale, les bonbonnes sont choisies, comme pour le mode de réalisation des figures 1 et 2, de façon à occuper un maximum du volume interne de l'enceinte extérieure 26 ou 32, afin que le volume de carburant gazeux soit supérieur au volume de carburant liquide chargé dans l'espace libre régnant entre les bonbonnes et les parois de l'enceinte extérieure (respectivement 27a sur les figures 4 et 5 et 33a sur les figures 6 et 7).

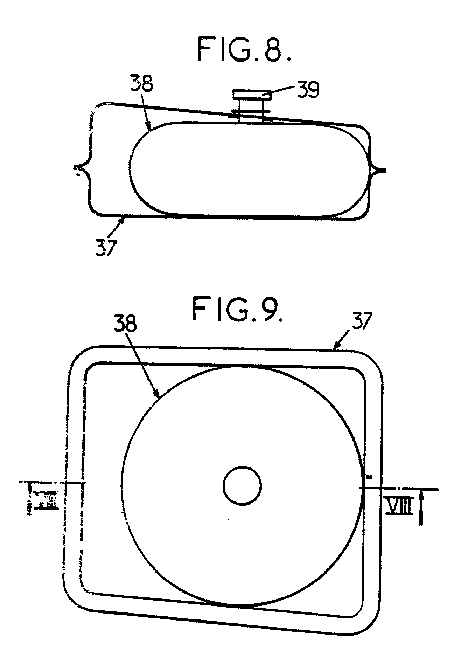

Les figures 8 et 9 montrent encore un autre mode de réalisation dérivant de ceux des figures 4 et 5 et 6 et 7. Dans ce réservoir, l'enceinte extérieure 37 est constituée dans les mêmes conditions que les enceintes extérieures 26 et 32 des modes de réalisation précédents, à partir des deux copies du réservoir à essence équipant le véhicule, mais, ici, sans interposition d'un quelconque bandeau intermédiaire. La réserve de gaz liquéfié est constituée par une seule bonbonne 38 cylindrique de révolution aplatie, disposée verticalement avec sa polyvanne 39 située sur le dessus.

La hauteur de la bonbonne est choisie au plus égale à la hauteur la plus faible du réservoir et son diamètre est tel qu'elle s'inscrit dans la zone de plus grandes dimensions du réservoir en étant en contact avec trois des côtés de celui-ci.

De la même manière, il est possible d'envisager une variante pour l'embout de remplissage qui soit d'une fabrication et surtout d'une implantation plus simple que l'embout 17 de la figure 3.

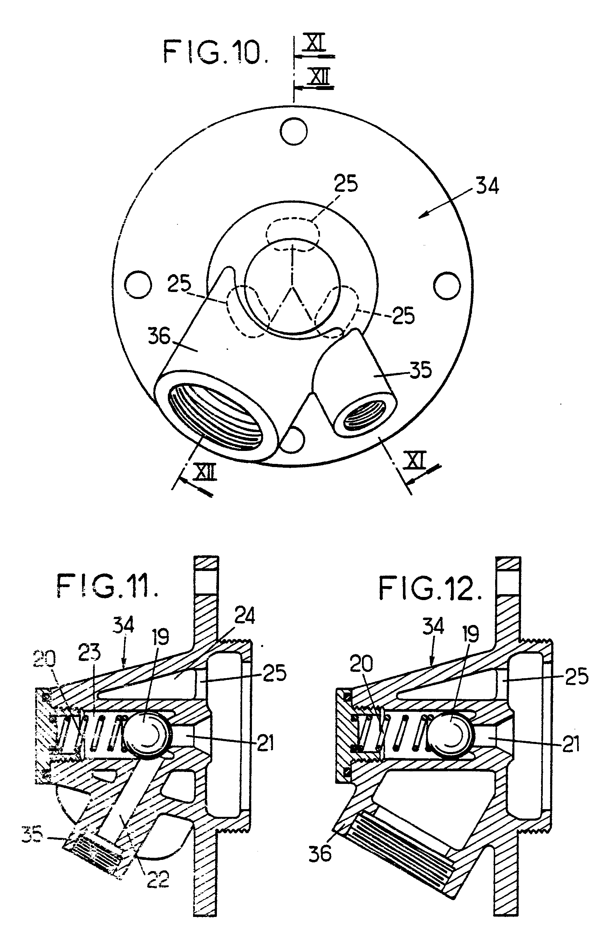

L'embout 34 représenté aux figures 10 à 12 comporte toujours des orifices de remplissage coaxiaux, comme l'embout 17 ; par contre les raccords de connexion avec les conduits de liaison au réservoir mixte ne sont plus, eux, coaxiaux, mais disposés en T ou en Y, comme visible à la figure 10. Autrement dit, le raccord 35 est connecté au conduit de gaz liquéfié aboutissant à la ou aux polyvannes de la ou des enceintes intérieures, tandis que le raccord 36 est connecté au conduit de carburant liquide, extérieur au conduit de gaz liquéfié, aboutissant à l'enceinte extérieure. Les figures 11 et 12 sont des coupes axiales respectivement par le raccord 35 et par le raccord 36, montrant la structure de l'embout. Sur les figures 10 à 12, les mêmes références numériques ont été conservées pour désigner les organes identiques à l'embout 17 de la figure 3. Le fonctionnement de l'embout de remplissage 34 est identique à celui de l'embout 17 et ce qui a été indiqué précédemment pour ce dernier reste valable.

Comme il va de soi et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes.

**Revendications**

1. Réservoir pour stocker les carburants d'alimentation d'un moteur à combustion interne agencé pour utiliser aussi bien du carburant liquide que du carburant gazeux, notamment liquéfié, notamment pour véhicule automobile, caractérisé en ce qu'il comprend :

au moins une première enceinte fermée ou enceinte intérieure (1, 27, 33) constituant un réservoir intérieur agencé pour contenir le carburant gazeux liquéfié,

une seconde enceinte fermée ou enceinte extérieure (2, 26, 32) entourant ladite première enceinte et définissant avec celle-ci un réservoir périphérique ou réservoir extérieur (3, 26a, 33a) agencé pour contenir le carburant liquide,

un conduit (15) de remplissage du réservoir intérieur et un conduit (16) de remplissage du réservoir extérieur,

et un unique embout de remplissage (17, 34) raccordé aux extrémités libres des deux conduits de remplissage et agencé pour autoriser le remplissage sélectif de l'un ou l'autre réservoir.

2. Réservoir selon la revendication 1, caractérisé en ce que l'embout de remplissage (17, 34) comprend une zone centrale raccordée à l'extrémité libre du conduit (15, 36) de remplissage du réservoir intérieur et munie d'un organe (19) d'obturation étanche pour le carburant gazeux et comprend une zone périphérique, entourant ladite zone centrale, raccordée à l'extrémité libre du conduit (16, 36) de remplissage du réservoir extérieur et munie d'au moins un passage (25) pour le carburant liquide.

3. Réservoir selon la revendication 1 ou 2, caractérisé en ce que les enceintes (1, 2) sont cylindriques de révolution et coaxiales avec des extrémités arrondies sensiblement en forme de calotte sphérique.

4. Réservoir selon la revendication 1 ou 2, caractérisé en ce qu'il comprend plusieurs enceintes intérieures (27, 33), de forme cylindrique de révolution, disposées côte à côte au sein de l'enceinte extérieure (26, 32).

5. Réservoir selon l'une quelconque des revendications 1, 2 ou 4, caractérisé en ce que l'enceinte extérieure est constituée par le réservoir normalement prévu pour le véhicule à équiper.

6. Réservoir selon l'une quelconque des revendications 1, 2 ou 4, caractérisé en ce que l'enceinte extérieure (26, 32) est constituée par la partie de dessus (30) et la partie de fond (29) du réservoir normalement prévu pour le véhicule à équiper et au moins un bandeau intermédiaire périphérique (31) interposé entre ces parties de dessus et de fond, la hauteur de ce bandeau intermédiaire étant déterminée pour que l'enceinte extérieure ainsi constituée présente des dimensions, notamment une hauteur, suffisantes pour recevoir l'enceinte ou les enceintes intérieures.

7. Réservoir selon l'une quelconque des revendications 1 à 6, caractérisé en ce que des cerclages d'entretoisement (5 ; 15a) sont disposés entre les enceintes intérieure et extérieure du réservoir, ces cerclages possédant au moins un passage transversal traversant (14).

8. Réservoir selon l'une quelconque des revendications 1 à 7, caractérisé en ce que chaque enceinte intérieure (1, 27, 33) est munie d'un bossage support de polyvanne (10, 28, 33b) qui s'étend jusqu'à l'extérieur de l'enceinte extérieure (2, 26, 32).

9. Réservoir selon l'une quelconque des revendications 1 à 8, caractérisé en ce que la capacité du réservoir extérieur (3, 26a, 33a) est inférieure à la capacité du réservoir intérieur (1) ou au volume total des réservoirs intérieurs (1, 27, 33).

**Claims**

1. A tank for storing the fuels of an internal combustion engine adapted to run on liquid fuel as well as gas fuel, inter alia liquefied gas fuel, inter alia for a motor vehicle, characterised in that it comprises :

At least one first enclosure or inner enclosure (1, 27, 33) operative as an inner tank for receiving the liquefied gas fuel ;

A second or outer enclosure (2, 26, 32) which extends around the first enclosure and defines therewith a peripherical or outer tank (3, 26a, 33a) for the liquid fuel ;

A filling line (15) for the inner tank and a filling line (16) for the outer tank, and

A single filling spout (17, 34) connected to the free ends of the two filling lines and adapted to permit selective filling of either tank.

2. A tank according to claim 1, characterised in that the spout (17, 34) comprises a central zone connected to the free end of the inner-tank filling line (15, 36) and having an element (19) for providing a hermetic closure for the gas fuel and comprises a peripheral zone which extends around the central zone and which is connected to the free end of the outer-tank filling line (16, 36) and which has at least one passage (25) for liquid fuel.

3. A tank according to claim 1 or 2, characterised in that the enclosures (1, 2) are cylinders of revolution and coaxial with rounded ends each substantially in the shape of a spherical cap.

4. A tank according to claim 1 or 2, characterised in that it comprises a number of inner enclosures (27, 33) having a cylindrical shape of revolution and disposed side by side in the outer enclosure (26, 32).

5. A tank according to any of claims 1, 2 or 4, characterised in that the outer enclosure is the normal tank for the vehicle to be equipped.

6. A tank according to any of claims 1, 2 or 4, characterised in that the outer enclosure (26, 32) is embodied by the top part (30) and the bottom part (29) of the normal tank of the vehicle to be equipped and at least one intermediate peripheral band (31) interposed between the latter parts, the height of the band (31) being such that the resulting outer enclosure has dimensions, inter alia a height, sufficient to receive the or each inner enclosure.

7. A tank according to any of claims 1-6, characterised in that bracing hoops (5 ; 15a) are disposed between the inner and outer enclosures of the tank and have at least one through crosspassage (14).

8. A tank according to any of claims 1-7, characterised in that each inner enclosure (1, 27, 33) has a multivalve unit support member (10, 28, 33b) which extends as far as the outside of the outer enclosure (2, 26, 32).

9. A tank according to any of claims 1-8, characterised in that the capacity of the outer tank (3, 26a, 33a) is less than the capacity of the inner tank (1) or than the total volume of the inner tanks (1, 27, 33).

**Patentansprüche**

1. Tankbehälter für Kraftstoffe für Verbrennungsmotoren zur Verwendung von sowohl flüssigem als auch gasförmigem, insbesondere verflüssigtem, Kraftstoff, insbesondere für Kraftfahrzeuge, gekennzeichnet durch :

wenigstens einen abgeschlossenen oder inneren Behälter (1, 27, 33), welcher einen inneren Tank darstellt und zur Aufnahme des verflüssigten gasförmigen Kraftstoffes dient,

einen zweiten abgeschlossenen oder äußeren Behälter (2, 26, 32), welcher den ersten Behälter umgibt und zusammen mit diesem einen äußeren oder umgebenden Tank (3, 26a, 33a) definiert, welcher zur Aufnahme flüssigen Kraftstoffes bestimmt ist,

eine Befüll-Leitung (15) für den inneren Tank und eine Befüll-Leitung (16) für den äußeren Tank,

und einen gemeinsamen Tankstutzen (17, 34) an den freien Enden der beiden Befüll-Leitungen, welcher die selektive Befüllung des einen oder anderen Tanks ermöglicht.

2. Tankbehälter nach Anspruch 1, dadurch gekennzeichnet, daß der Tankstutzen (17, 34) eine am freien Ende der Befüll-Leitung (15, 36) des inneren Tanks angeordnete zentrale Zone umfaßt, welche mit einem dichtenden Absperrorgan (19) für den gasförmigen Kraftstoff versehen ist sowie eine periphere Zone, welche die zentrale Zone umgibt und am freien Ende der Befüll-Leitung (16, 36) des äußeren Tanks angeordnet ist, welche mit wenigstens einem Durchlaß (25) für den flüssigen Kraftstoff versehen ist.

3. Tankbehälter nach Anspruch 1 oder 2, dadurch gekennzeichnet, daß die Behälter (1, 2) zylinderförmig und koaxial mit im wesentlichen kugelkalottenförmig abgerundeten Enden ausgebildet sind.

4. Tankbehälter nach Anspruch 1 oder 2, dadurch gekennzeichnet, daß er eine Mehrzahl von inneren zylinderförmigen Behältern (27, 33) umfaßt, welche Seite an Seite im Inneren des äußeren Behälters (26, 32) angeordnet sind.

5. Tankbehälter nach einem der Ansprüche 1, 2 oder 4, dadurch gekennzeichnet, daß der äußere Behälter durch den in dem auszurüstenden Kraftfahrzeug normalerweise vorgesehenen Tank gebildet ist.

6. Tankbehälter nach einem der Ansprüche 1, 2 oder 4, dadurch gekennzeichnet, daß der äußere Behälter (26, 32) durch den unteren und oberen Raumbereich des normalerweise vorgesehenen Tanks des auszurüstenden Kraftfahrzeugs und wenigstens ein peripheres Zwischenband (31) gebildet ist, welches zwischen den unteren und oberen Hälften angeordnet ist, wobei die Höhe dieses Zwischenbandes so gewählt ist, daß der äußere Behälter, der auf diese Weise gebildet wird, derartige Abmessungen, insbesondere in der Höhe aufweist, welche ausreichen, um den oder die inneren Behälter aufzunehmen.

7. Tankbehälter nach einem der Ansprüche 1 bis 6, dadurch gekennzeichnet, daß Verankerungsringe (5, 15a) zwischen dem inneren und äußeren Behälter des Tanks angeordnet sind, wobei diese Verankerungsringe wenigstens einen durchgehenden transversalen Durchlaß (14) aufweisen.

8. Tankbehälter nach einem der Ansprüche 1 bis 7, dadurch gekennzeichnet, daß jeder innere Behälter (1, 27, 33) einen Tankblock (10, 28, 33b) aufweist, welcher sich zur Außenseite des äußeren Behälters (2, 26, 32) hin erstreckt.

9. Tankbehälter nach einem der Ansprüche 1 bis 8, dadurch gekennzeichnet, daß der Rauminhalt des äußeren Behälters (3, 26a, 33a) geringer ist als der Rauminhalt des inneren Behälters (1) bzw. des Gesamtvolumens der inneren Behälter (1, 27, 33).

FIG.1.

FIG.2.

# FIG.3.

10

15

15a

16

15a

23  17  19  24

20

22

15a

25

18

21

25

FIG.6.

FIG.7.

FIG.4.

FIG.5.

## FIG.8.

38    39

37

## FIG.9.

38    37

FIG.10.

FIG.11.

FIG.12.